# EUROPÄISCHE PATENTSCHRIFT

(11) **EP 3 292 747 B1**
(45) Veröffentlichungstag und Bekanntmachung des Hinweises auf die Patenterteilung: **25.09.2019**
(21) Anmeldenummer: 17401094.2
(22) Anmeldetag: 24.08.2017
(51) Int. Cl.: A01C 7/04, A01C 7/08

(54) **SÄMASCHINE MIT VEREINZELUNGSVORRICHTUNG**
SEED DRILL WITH SINGULATING DEVICE
SEMOIR DOTÉ D'UN DISPOSITIF DE SÉPARATION INDIVIDUELLE DE GRAINES

(30) Priorität: 09.09.2016 DE 102016116908
(43) Veröffentlichungstag der Anmeldung: 14.03.2018
(73) Patentinhaber: Amazonen-Werke H. Dreyer GmbH & Co. KG, 49205 Hasbergen (DE)
(72) Erfinder: Wien, Thomas, 28816 Stuhr (DE)

(56) Entgegenhaltungen:
- WO-A1-2011/056138
- RU-C2- 2 538 387
- US-A- 4 872 785
- US-A1- 2006 180 063

## Beschreibung

Die Erfindung betrifft eine landwirtschaftliche Sämaschine mit Vereinzelungsvorrichtung gemäß dem Oberbegriff des Patentanspruches 1.

Eine derartige Sämaschine ist beispielsweise in der EP 0 237 766 A1 beschrieben. Die beschriebene Sämaschine weist mehrere Vereinzelungsvorrichtungen auf, welche jeweils in einem Gehäuse angeordnet sind. Die Vereinzelungsvorrichtung umfasst ein rotierend angetriebenes Vereinzelungselement, welches das Gehäuse luftdicht in zwei Bereiche unterteilt. Das Gehäuse umfasst eine Luftöffnung, welche mittels einer Luftförderleitung mit einem Gebläse verbunden ist. Mithilfe des Gebläses lässt sich in dem Gehäuse ein Unter- und/oder Überdruck erzeugen. Dabei entsteht eine Druckdifferenz zwischen den beiden durch das Vereinzelungselement voneinander luftdicht abgetrennten Bereichen des Gehäuses. Die Druckdifferenz wird lediglich an Aussparungen des Vereinzelungselements aufgehoben, welche zur Mitnahme einzelner Saatgutkörner vorgesehen sind.

Wird das Gebläse und/oder die Luftzufuhr zur Vereinzelungsvorrichtung abgeschaltet, besteht die Gefahr, dass in der Vereinzelungsvorrichtung befindliches Saatgut durch die Luftöffnung in die Luftförderleitung gelangt. Dort kann es zu Verunreinigungen und/oder Verstopfungen führen, welche nachfolgend die Saatgutvereinzelung stören können. Um dies zu verhindern, sind aus dem Stand der Technik Sämaschinen bekannt, welche im Bereich der Luftöffnung Trennsiebe umfassen, die den Luftstrom in die Vereinzelungsvorrichtung ermöglichen, eine Saatgutbewegung von der Vereinzelungsvorrichtung in die Luftförderleitung aber unterbinden.

Nachteilig bei derartigen Trennsieben ist, dass sie insbesondere für feines Saatgut sehr feinmaschig sein müssen und sie an einer für Reinigungsarbeiten schlecht erreichbaren Position angeordnet sind. Dadurch besteht eine große Verunreinigungs- und/oder Verstopfungsgefahr derartiger Trennsiebe, wodurch wiederum die Vereinzelungsqualität negativ beeinflusst wird.

Die US 2006/0180063 A1 beschreibt eine Sämaschine mit mehreren Vereinzelungsvorrichtungen, welche jeweils mit einer Luftförderleitung verbunden sind. Wenn eine Vereinzelungsvorrichtung außer Betrieb gesetzt wird, wird die Verbindung zu mit der Luftförderleitung getrennt. Damit für die im Betrieb verbleibenden Vereinzelungseinrichtungen ein ausreichender Luftstrom aufrecht erhalten werden kann, werden die getrennten Luftförderleitungen mit einem Abdeckelement abgedeckt. Dabei bleiben die Luftöffnungen der außer Betrieb gesetzten Vereinzelungsvorrichtungen offen. Nachteilig ist dabei, dass beispielsweise Staub in die Vereinzelungsvorrichtung gelangen kann. Derartige Verschmutzungen können den Betrieb der Vereinzelungsvorrichtungen oder die Vereinzelungsqualität negativ beeinflussen.

Der Erfindung liegt daher die Aufgabe zugrunde, eine Vereinzelungsvorrichtung zu schaffen, welche das Eindringen von Saatgut in die Luftförderleitung verhindert und unempfindlich gegen Verunreinigungen und/oder Verstopfungen im Bereich der Luftöffnung und/oder der Luftförderleitung ist.

Diese Aufgabe wird erfindungsgemäß durch die Merkmale des Anspruchs 1 gelöst. Das Abdeckelement verhindert durch das Abdecken der Luftöffnung in einfacher und zuverlässiger Weise das Eindringen von Saatgut in die Luftförderleitung.

Erfindungsgemäß ist vorgesehen, dass das Abdeckelement zwischen einer die Luftöffnung abdeckenden Abdeckposition und einer die Luftöffnung freigebenden Arbeitsposition verbringbar ist. Auf diese Weise ist die Funktion der Vereinzelungseinrichtung während des Ausbringvorgangs nicht aufgrund einer mittels des Abdeckelements abgedeckten Luftöffnung beeinträchtigt. Das Abdeckelement gibt während des Ausbringvorgangs die Luftöffnung zumindest teilweise frei und deckt sie außerhalb des Ausbringvorgangs zuverlässig ab.

Ferner ist erfindungsgemäß vorgesehen, dass dem Abdeckelement ein Antriebselement zugeordnet ist, welches geeignet ist, das Abdeckelement zwischen der Abdeck- und der Arbeitsposition zu verbringen. Dadurch kann in einfacher Weise das an einer kaum zugänglichen Position innerhalb der Vereinzelungsvorrichtung angeordnete Abdeckelement zwischen beiden Positionen verbracht werden.

Es ist vorteilhaft, dass das Abdeckelement in seiner die Luftöffnung abdeckenden Abdeckposition geeignet ist, das Eindringen von Saatgut in die Luftförderleitung zu verhindern. Auf diese Weise wird die Gefahr von Verunreinigungen und/oder Verstopfungen der Luftförderleitung erheblich reduziert. Dadurch sind ein zuverlässiger Betrieb der Sämaschine sowie eine hohe Vereinzelungsqualität des auszubringenden Saatguts gewährleistet.

Es ist vorteilhaft, dass eine Steuereinrichtung vorgesehen ist, welche ein ferngesteuertes Verbringen des Abdeckelements zwischen Abdeck- und/oder Arbeitsposition ermöglicht. Somit kann durch ein Bediener das Abdeckelement zwischen beiden Positionen verbracht werden, ohne dass dieser beispielsweise den Führerstand seiner landwirtschaftlichen Zugmaschine verlassen muss, mit deren Hilfe die Sämaschine während des Ausbringvorgangs bewegt wird. Zudem ist ein Verbringen des Abdeckelements zwischen beiden Positionen jederzeit während des Ausbringvorgangs möglich.

Es ist besonders vorteilhaft, dass eine Steuereinrichtung vorgesehen ist, welche beim Abschalten der Luftförderung ein zumindest annähernd gleichzeitiges Verbringen des Abdeckelements in die Abdeckposition und bei Einschalten der Luftförderung ein zumindest annähernd gleichzeitiges Verbringen in die Arbeitsposition ermöglicht. Während eines Ausbringvorgangs von Saatgut wird das Ausbringen und somit die Vereinzelung von Saatgut mehrfach planmäßig gestoppt. Dies ist beispielsweise nötig, wenn im Vorgewende gewendet wird. Typischerweise wird die Luftzufuhr zur Vereinzelungsvorrichtung gestoppt, wenn kein Saatgut ausgebracht werden soll. Die Gefahr, dass Saatgut durch die Luftöffnung in die Luftförderleitung eindringt, besteht dann jedes Mal. Besonders zuverlässig kann dieses Eindringen verhindert werden, wenn das Abdecken der Luftöffnung mit dem Abschalten der Luftförderung verbunden ist und automatisiert erfolgt. Durch eine Automatisierung wird zudem ein Bedienfehler durch den Bediener ausgeschlossen.

Es ist von Vorteil, dass zwischen dem Abschalten der Luftförderung und/oder des Gebläses und dem Verbringen des Abdeckelements in seine Abdeckposition sowie dem Einschalten der Luftförderung und/oder des Gebläses und dem Verbringen des Abdeckelements in seine Arbeitsposition eine jeweils festlegbare Verzögerungszeit liegt. Auf diese Weise wird die Vereinzelungs- und/oder Ausbringqualität beim Verbringen des Abdeckelements zwischen beiden Positionen nicht negativ beeinflusst.

Beim Verbringen des Abdeckelements in sein Abdeckposition bewirkt eine geeignet gewählte Verzögerungszeit, dass der verbleibende Luftstrom ausreicht, um das bereits in den zu Ausbringelementen führenden Förderleitungen befindliche Saatgut in optimaler Weise auszubringen.

Beim Verbringen des Abdeckelements in seine Arbeitsposition bewirkt eine geeignet gewählte Verzögerungszeit, dass sich vor dem Freigeben der Luftöffnung ein ausreichend großer Luftdruck aufgebaut hat, damit nicht im Bereich des Abdeckelements aufgestautes Saatgut nach Freigeben der Luftöffnung in die Förderleitung fällt.

Ein weiterer Vorteil wird dadurch erreicht, dass dem Abdeckelement ein Energiespeicher zugeordnet ist, der im Zusammenwirken mit dem Antriebselement geeignet ist, das Abdeckelement zwischen Abdeck- und/oder Arbeitsposition zu verbringen. Mithilfe des Energiespeichers wird erreicht, dass sich das Abdeckelement sehr schnell zwischen beiden Positionen verbringen lässt. Dies bewirkt, dass sich das Abdeckelement nicht länger als notwendig in einer Zwischenposition im Luftstrom befindet und somit den Luftstrom stört. Der Energiespeicher kann dabei beispielsweise mechanisch, als spannbares Federelement, oder elektro-magnetisch ausgeführt sein.

Weitere Einzelheiten der Erfindung sind der Beispielsbeschreibung und den Zeichnungen zu entnehmen. Die Zeichnungen zeigen
- Fig.1: ein Säaggregat einer Einzelkornsämaschine in perspektivischer Ansicht von schräg hinten,

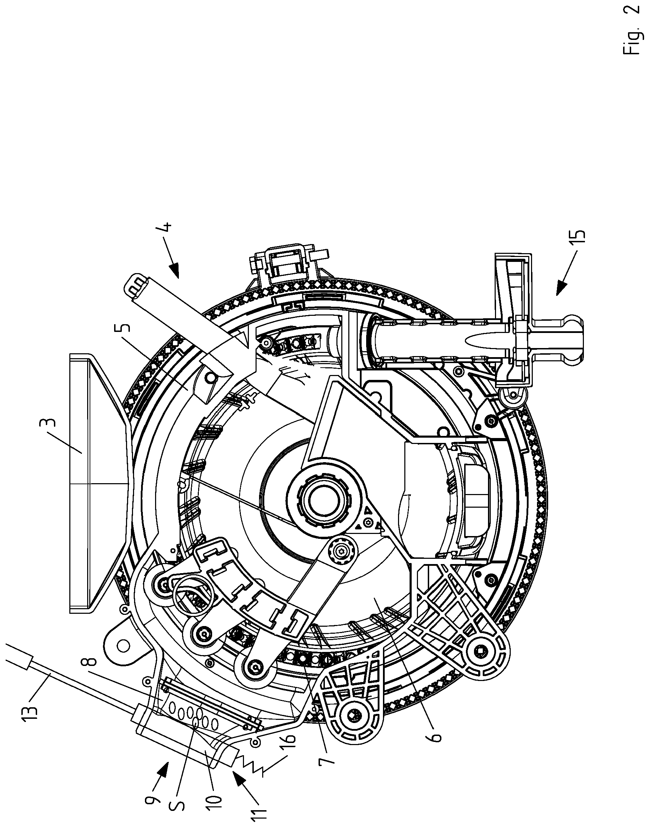

- Fig.2: die Vereinzelungsvorrichtung mit Abdeckelement in Abdeckposition im seitlichen Querschnitt und

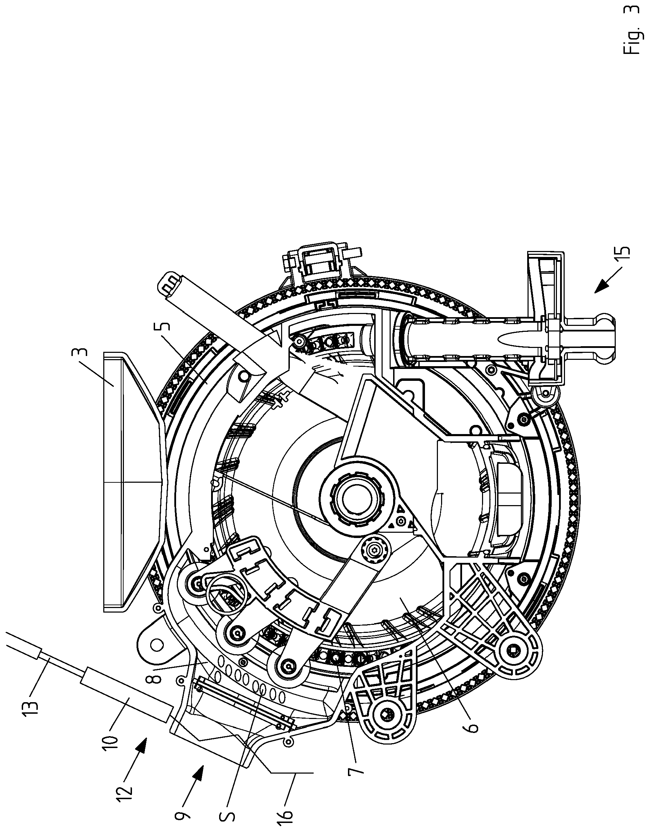

- Fig.3: die Vereinzelungsvorrichtung mit Abdeckelement in Arbeitsposition im seitlichen Querschnitt.

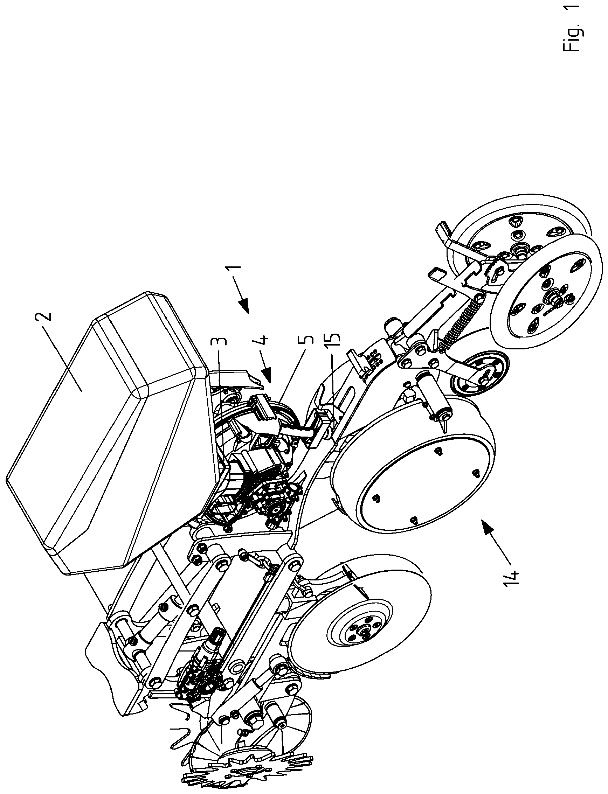

Eine landwirtschaftliche Sämaschine, welche im gewählten Beispiel als Einzelkornsämaschine ausgebildet ist, weist an einem quer zur Fahrtrichtung angeordneten Rahmen mehrere nebeneinander angeordnete Säaggregate 1 auf, wie es in Fig. 1 gezeigt ist.

Jedes dieser Säaggregate 1 umfasst einen Vorratsbehälter 2 zur Bevorratung des auszubringenden Saatguts S. Im unteren Bereich weist der Vorratsbehälter 2 einen Auslaufbereich 3 auf. Durch den Auslaufbereich 3 gelangt das Saatgut S in die unterhalb des Vorratsbehälters 2 angeordnete Vereinzelungsvorrichtung 4.

Die Vereinzelungsvorrichtung 4 umfasst ein Gehäuse 5. Innerhalb des Gehäuses 5 ist ein Vereinzelungselement 6 rotierend angetrieben. Das Vereinzelungselement 6 weist Aussparungen 7 zur Mitnahme einzelner Körner des Saatguts S auf und unterteilt das Innere des Gehäuses 5 luftdicht in zwei Bereiche. Eine räumliche Verbindung zwischen beiden Bereichen des Gehäuses 5 ist nur durch die Aussparungen 7 des Vereinzelungselements 6 gegeben.

Das Gehäuse 5 umfasst eine Luftöffnung 8, welche über eine Luftförderleitung 9 mit einem Gebläse verbunden ist. Mittels des Gebläses wird im Gehäuse 5 ein Über- und/oder Unterdruck erzeugt. Durch die räumliche Trennung der beiden Bereiche des Gehäuses 5 mittels des Vereinzelungselements 6 wird eine Druckdifferenz zwischen beiden Bereichen des Gehäuses 5 erzeugt. Diese Druckdifferenz bewirkt die Vereinzelung des Saatguts S, indem sich einzelne Körner des Saatguts S in den Aussparungen 7 anlagern.

Wird die Luftzufuhr und/oder das Gebläse abgeschaltet, besteht die Gefahr, dass Saatgut S, welche sich im Inneren des Gehäuses 5 befindet die Luftöffnung 8 durchtritt und in die Luftförderleitung 9 gelangt. In der Luftförderleitung 9 kann das Saatgut S Verunreinigungen und/oder Verstopfungen hervorrufen, welche die Vereinzelungsqualität herabsetzen. Daher ist das Eindringen von Saatgut S in die Luftförderleitungen 9 zu vermeiden.

Zur Vermeidung des Eindringens von Saatgut S in die Luftförderleitung 9 ist ein Abdeckelement 10 vorgesehen. Das Abdeckelement 10 weist eine die Luftöffnung 8 verschließende Abdeckposition 11 und eine die Luftöffnung 8 freigebende Arbeitsposition 12 auf. Das Abdeckelement 10 kann beispielsweise als Klappe oder Schieber ausgeführt sein.

Mittels eines Antriebselements 13 wird das Abdeckelement 10 zwischen beiden Positionen verbracht. Beispielsweise ist das Antriebselement 13 als Hydraulikzylinder, Elektromotor, mechanisches oder pneumatisches Stellglied ausgeführt.

Wird nun die Luftzufuhr und/oder das Gebläse abgeschaltet, wird das Abdeckelement 10 in seine Abdeckposition 11 verbracht und verhindert somit, dass Saatgut S in die Luftförderleitung 9 eindringen kann. Wird die Luftzufuhr und/oder das Gebläse wieder zugeschaltet, wird das Abdeckelement 10 in seine Arbeitsposition 12 verbracht und ermöglicht somit das Einströmen von Luft in das Innere des Gehäuses 5.

In bevorzugter Weise ist das Antriebselement 13 mit einer Steuereinrichtung verbunden, welche ein automatisiertes Verbringen des Abdeckelements 10 zwischen beiden Positionen ermöglicht. Dadurch wird die Abdeckposition 11 automatisiert eingenommen, sobald der Luftstrom und/oder das Gebläse abgeschaltet werden. Analog wird die Arbeitsposition 12 automatisiert eingenommen, sobald der Luftstrom und/oder das Gebläse eingeschaltet werden.

Dabei kann jeweils eine zeitliche Verzögerung festgelegt sein. Beim Verbringen des Abdeckelements 10 in seine Abdeckposition 11 bewirkt eine geeignet gewählte Verzögerungszeit, dass der verbleibende Luftstrom ausreicht, um das bereits in den zu Ausbringelementen 14 führenden Förderleitungen 15 befindliche Saatgut S in optimaler Weise auszubringen. Beim Verbringen des Abdeckelements 10 in seine Arbeitsposition 12 bewirkt eine geeignet gewählte Verzögerungszeit, dass sich vor dem Freigeben der Luftöffnung 8 ein ausreichend großer Luftdruck aufgebaut hat, damit nicht im Bereich des Abdeckelements 10 aufgestautes Saatgut nach Freigeben der Luftöffnung 8 in die Förderleitung 9 fällt.

Im Zusammenwirken mit dem Antriebselement 13 ist ein Energiespeicher 16 vorgesehen. Der Energiespeicher 16 kann dabei beispielsweise mechanisch, als spannbares Federelement, oder elektro-magnetisch ausgeführt sein. Mithilfe des Energiespeichers 16 ist ein schnelles Verbringen des Abdeckelements 10 zwischen Arbeits- 12 und Abdeckposition 11 möglich.

Die vorgeschlagene Anordnung vermeidet in der beschriebenen Weise das Eindringen von Saatgut S in die Luftförderleitung 9. Damit wird Verschmutzungen und/oder Verstopfungen der Luftförderleitung 9 vorgebeugt. Dadurch wird eine hohe Vereinzelungsqualität der Vereinzelungsvorrichtung 4 aufrecht erhalten.

## Patentansprüche

1. Landwirtschaftliche Sämaschine mit zumindest einer Vereinzelungsvorrichtung (4), welche in einem Gehäuse (5) angeordnet ist, wobei das Gehäuse (5) zumindest eine mit einer Luftförderleitung (9) verbundene Luftöffnung (8) aufweist, welche zum Zu- und/oder Abführen von Luft mittels eines Gebläses in den und/oder aus dem Innenraum des Gehäuses (5) vorgesehen ist, wodurch im Innenraum des Gehäuses (5) mittels des Gebläses ein Über- und/oder Unterdruck erzeugbar ist, **dadurch gekennzeichnet, dass** die Luftöffnung (8) mittels eines Abdeckelements (10) abdeckbar ist, wobei das Abdeckelement (10) zwischen einer die Luftöffnung (8) abdeckenden Abdeckposition (11) und einer die Luftöffnung (8) freigebenden Arbeitsposition (12) verbringbar ist und dem Abdeckelement (10) ein Antriebselement (13) zugeordnet ist, welches geeignet ist, das Abdeckelement (10) zwischen der Abdeck- (11) und der Arbeitsposition (12) zu verbringen.

2. Sämaschine nach Anspruch 1, **dadurch gekennzeichnet, dass** das Abdeckelement (10) in seiner die Luftöffnung (8) abdeckenden Abdeckposition (11) geeignet ist, das Eindringen von Saatgut (S) in die Luftförderleitung (9) zu verhindern.

3. Sämaschine nach zumindest einem der vorangegangenen Ansprüche, **dadurch gekennzeichnet, dass** eine Steuereinrichtung vorgesehen ist, welche ein ferngesteuertes Verbringen des Abdeckelements (10) zwischen Abdeck- (11) und/oder Arbeitsposition (12) ermöglicht.

4. Sämaschine nach zumindest einem der vorangegangenen Ansprüche, **dadurch gekennzeichnet, dass** eine Steuereinrichtung vorgesehen ist, welche beim Abschalten der Luftförderung ein zumindest annähernd gleichzeitiges Verbringen des Abdeckelements (10) in die Abdeckposition (11) und bei Einschalten der Luftförderung ein zumindest annähernd gleichzeitiges Verbringen in die Arbeitsposition (12) ermöglicht.

5. Sämaschine nach Anspruch 4, **dadurch gekennzeichnet, dass** zwischen dem Abschalten der Luftförderung und dem Verbringen des Abdeckelements (10) in seine Abdeckposition (11) sowie dem Einschalten der Luftförderung und dem Verbringen des Abdeckelements in seine Arbeitsposition (12) eine jeweils festlegbare Verzögerungszeit liegt.

6. Sämaschine nach zumindest einem der vorangegangenen Ansprüche, **dadurch gekennzeichnet, dass** dem Abdeckelement (10) ein Energiespeicher (16) zugeordnet ist, der im Zusammenwirken mit dem Antriebselement (13) geeignet ist, das Abdeckelement (10) zwischen Abdeck- (10) und/oder Arbeitsposition (12) zu verbringen.

## Claims

1. Agricultural seed drill having at least one singling apparatus (4) which is arranged in a housing (5), wherein the housing (5) has at least one air opening (8) which is connected to an air delivery line (9) and is provided to feed and/or discharge air into and/or out of the interior of the housing (5) by means of a blower, with the result that a positive and/or negative pressure is able to be generated in the interior of the housing (5) by means of the blower, **characterized in that** the air opening (8) is able to be covered by means of a covering element (10), wherein the covering element (10) is movable between a covering position (11) covering the air opening (8) and a working position (12) uncovering the air opening (8), and the covering element (10) is assigned a drive element (13), which is suitable for moving the covering element (10) between the covering position (11) and the working position (12).

2. Seed drill according to Claim 1, **characterized in that**, in its covering position (11) covering the air opening (10), the covering element (10) is suitable for preventing the penetration of seed (S) into the air delivery line (9).

3. Seed drill according to at least one of the preceding claims, **characterized in that** a control device is provided, which allows the covering element (10) to be moved by remote control between the covering position (11) and/or working position (12).

4. Seed drill according to at least one of the preceding claims, **characterized in that** a control device is provided, which, when the air delivery is switched off, allows the covering element (10) to be moved into the covering position (11) at least approximately at the same time, and when the air delivery is switched on, allows the covering element (10) to be moved into the working position (12) at least approximately at the same time.

5. Seed drill according to Claim 4, **characterized in that** a delay time that is settable in each case exists between the switching off of the air delivery and the moving of the covering element (10) into its covering position (11) and between the switching on of the air delivery and the moving of the covering element into its working position (12).

6. Seed drill according to at least one of the preceding claims, **characterized in that** the covering element (10) is assigned an energy store (16), which is suitable, in conjunction with the drive element (13), for moving the covering element (10) between the covering position (10) and/or working position (12).

## Revendications

1. Semoir agricole comprenant au moins un arrangement de séparation (4) qui est disposé dans un boîtier (5), le boîtier (5) possédant au moins une bouche d'air (8) reliée à une conduite de transport d'air (9), qui est conçue pour acheminer et/ou évacuer de l'air au moyen d'un ventilateur dans et/ou depuis l'espace intérieur du boîtier (5), moyennant quoi une surpression et/ou une dépression peut être générée dans l'espace intérieur du boîtier (5) au moyen du ventilateur, **caractérisé en ce que** la bouche d'air (8) peut être recouverte au moyen d'un élément de recouvrement (10), l'élément de recouvrement (10) pouvant être amené entre une position de recouvrement (11), qui recouvre la bouche d'air (8), et une position de travail (12), qui libère la bouche d'air (8), et un élément d'entraînement (13) étant associé à l'élément de recouvrement (10), lequel est adapté pour amener l'élément de recouvrement (10) entre la position de recouvrement (11) et de travail (12).

2. Semoir selon la revendication 1, **caractérisé en ce que** l'élément de recouvrement (10), dans sa position de recouvrement (11) qui recouvre la bouche d'air (8), est adapté pour empêcher la pénétration de semences (S) dans la conduite de transport d'air (9).

3. Semoir selon au moins l'une des revendications précédentes, **caractérisé en ce qu'**un dispositif de commande est présent, lequel permet de commander à distance l'amenée de l'élément de recouvrement (10) entre la position de recouvrement (11) et/ou de travail (12) .

4. Semoir selon au moins l'une des revendications précédentes, **caractérisé en ce qu'**un dispositif de commande est présent qui, lors de l'arrêt du transport d'air, permet d'amener au moins presque simultanément l'élément de recouvrement (10) dans la position de recouvrement (11) et, lors de la mise en marche du transport d'air, de l'amener au moins presque simultanément dans la position de travail (12).

5. Semoir selon la revendication 4, **caractérisé en ce qu'**un temps de retard pouvant respectivement être fixé se trouve entre l'arrêt du transport d'air et l'amenée de l'élément de recouvrement (10) dans sa position de recouvrement (11) ainsi qu'entre la mise en marche du transport d'air et l'amenée de l'élément de recouvrement dans sa position de travail (12).

6. Semoir selon au moins l'une des revendications précédentes, **caractérisé en ce qu'**un accumulateur d'énergie (16) est associé à l'élément de recouvrement (10), lequel, en coopération avec l'élément d'entraînement (13), est adapté pour amener l'élément de recouvrement (10) entre la position de recouvrement (10) et/ou de travail (12).
